(19) Europäisches Patentamt
European Patent Office
Office européen des brevets

(11) EP 0 617 725 B1

(12) EUROPEAN PATENT SPECIFICATION

(45) Date of publication and mention of the grant of the patent:
**05.09.2001 Bulletin 2001/36**

(21) Application number: **93900325.7**

(22) Date of filing: **21.12.1992**

(51) Int Cl.⁷: **C09D 143/04**, C09D 5/16

(86) International application number:
**PCT/GB92/02374**

(87) International publication number:
**WO 93/13179 (08.07.1993 Gazette 1993/16)**

(54) **PROCESS FOR FOULING INHIBITION**

VERFAHREN ZUM HEMMEN VON BEWUCHS

PROCEDE POUR EMPECHER LES SALISSURES

(84) Designated Contracting States:
**DE DK ES FR GB IT NL SE**

(30) Priority: **20.12.1991 GB 9127171**

(43) Date of publication of application:
**05.10.1994 Bulletin 1994/40**

(73) Proprietor: **International Coatings Limited**
**London W2 2ZB (GB)**

(72) Inventor: **MILLIGAN, Brian, David**
**Jesmond Newcastle upon Tyne NE2 2DL (GB)**

(74) Representative: **De Vries, Adriaan Jacobus**
**Akzo Nobel N.V.**
**Intellectual Property Department**
**(Dept. AIP)**
**P.O. Box 9300**
**6800 SB Arnhem (NL)**

(56) References cited:
**EP-A- 0 274 428** **EP-A- 0 295 702**
**EP-A- 0 427 293** **US-A- 4 910 252**

- **PATENT ABSTRACTS OF JAPAN vol. 15, no. 429 (C-0880) 31 October 1991 & JP 03 179 027 A (SHIN ETSU CHEM CO LTD) 05 August 1991**
- **PATENT ABSTRACTS OF JAPAN vol. 15, no. 34 (C-0799) 28 January 1991 & JP 02 272 080 A (TOYODA GOSEI CO LTD) 06 November 1990**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 617 725 B1

Printed by Jouve, 75001 PARIS (FR)

## Description

This invention relates to a process for inhibiting fouling of a substrate in an aquatic environment.

Man-made structures such as boat hulls, buoys, drilling platforms, oil production rigs and pipes which are immersed in water are prone to fouling by aquatic organisms such as green and brown algae, barnacles, mussels and the like. Such structures are commonly of metal, but may also comprise other structural materials such as concrete. This fouling is a nuisance on boat hulls, because it increases the frictional resistance towards movement through the water, with the consequence of reduced speeds and increased fuel costs. It is a nuisance on static structures such as the legs of drilling platforms and oil production rigs, firstly because the resistance of thick layers of fouling to waves and currents can cause unpredictable and potentially dangerous stresses in the structure, and, secondly, because fouling makes it difficult to inspect the structure for defects such as stress cracking and corrosion. It is a nuisance in pipes such as cooling water intakes and outlets, because the effective cross-sectional area is reduced by fouling, with the consequence of reduced flow rates.

The commercially most successful methods of inhibiting fouling have involved the use of anti-fouling coatings containing substances toxic to aquatic life, for example tributyltin chloride or cuprous oxide. Such coatings, however, are being regarded with increasing disfavour because of the damaging effects such toxins can have if released into the aquatic environment. There is accordingly a need for non-fouling coatings which do not contain markedly toxic materials.

It has been known for many years, for example, as disclosed in GB 1 307 001 and US 3 702 778 that silicone rubber coatings resist fouling by aquatic organisms. It is believed that such coatings present a surface to which the organisms cannot easily adhere, and they can accordingly be called non-fouling rather than anti-fouling coatings. Silicone rubbers and silicone compounds generally have very low toxic properties. Silicone rubber coatings have, however, gained little commercial acceptance. It is difficult to make them adhere well to the substrate surface that is to be protected, and they are mechanically rather weak and liable to damage.

EP 0 032 597 discloses that silicone polymers onto which organic polymeric segments are grafted may be vulcanised to form non-fouling coatings. The vulcanisation procedure may utilise a crosslinking agent such as tetraethyl orthosilicate and a catalyst such as a tin salt.

GB 2 188 938 discloses that vinylic polymers containing polymeric silicone side chains may be used to form thermoplastic non-fouling coatings.

GB Patent Application 2 192 400 discloses anti-fouling paint compositions which comprise a vinylic copolymer obtained by copolymerisation of:

(a) 1-50% by weight of a polymerisable unsaturated polysiloxane compound;
(b) 0-30% by weight of a polymerisable unsaturated alkoxysilane compound; and
(c) 20-99% by weight of a polymerisable unsaturated vinyl monomer other than (a) or (b).

The disclosed antifouling paint compositions may also comprise a hydroxyalkyl-tipped poly(diorganosiloxane) to the extent of 1-50 parts by weight per 100 parts by weight of the vinylic copolymer. The vinylic copolymer and the poly(diorganosiloxane) are not curable one with the other, and the coatings of the invention are thermoplastic and not vulcanised.

Coatings which contain a chemically inert oil or grease, often called a slipping agent, have been reported to offer improved resistance to fouling. GB 1 470 465 discloses the use of silicone oils as slipping agents in a vulcanised silicone rubber formulation. GB 1 581 727 discloses the use of silicone-free organic compounds, for example polyolefins with a molecular weight up to about 5000, as slipping agents in a vulcanised silicone rubber formulation.

The present invention provides a process for inhibiting fouling of a substrate in an aquatic environment which comprises applying to the substrate, before exposure to the said environment, a composition which comprises:

(A) a polymer carrying pendant and/or terminal curable functional groups, at least a major proportion of the repeating units in the polymer of (A) being other than siloxane units, and
(B) a curable organohydrogen polysiloxane or poly(diorganosiloxane), the curable functional groups in component (A) being capable of undergoing a curing reaction with component (B), and curing the applied composition.

The invention further provides the use of a substrate, in particular a marine structure, bearing a coating which has been applied by the above process in an aquatic environment.

A particular aspect of the present invention is the utilisation of the coating compositions to inhibit fouling of substrates in aquatic environments, preferably marine environments, especially the hulls of ships, the compositions being curved after application to the substrates.

When a coating composition is applied to a substrate and cured in accordance with the process of the present

invention, it has been found that the outermost surface region of the resulting coating is relatively rich in siloxane material, whereas the innermost region of the coating is relatively rich in the polymer of component (A), and it is believed that there will generally be a progressive increase in the concentration of siloxane material from the inner to the outer regions of the coating. As a result, the applied coating presents a siloxane-rich surface layer to the external environment and the good non-fouling and other protective properties associated with such material are obtained, but at the same time the mechanical weakness of previously proposed silicone rubber coatings is alleviated or avoided.

It has also been found that a coating formed from a composition used in the process according to the invention will in general adhere well to a variety of substrate surfaces without the need to use an adhesion modifier or an intermediate tie-coat. Thus, the coating composition may be applied directly to the surface of the substrate, optionally after a preliminary protective treatment (for example, anti-corrosive treatment in the case of a metal substrate).

Component (A) may comprise curable functional groups selected from epoxy, amino, hydroxy and alkoxy groups and hydrogen atoms, and/or curable silicon-containing functional groups. Advantageously, component (A) comprises curable silicon-containing functional groups, and in one form of composition used in the process according to the invention substantially all of the curable functional groups in component (A) are silicon-containing groups.

Component (A) comprises pendant and/or terminal curable functional groups. Pendant curable functionality is preferred, for example, in the case where the polymer of component (A) is derived from one or more ethylenically unsaturated monomers, and terminal curable functionality is preferred, for example, if the polymer of component (A) is polyurethane, epoxy or polyester based.

The curing reaction between components (A) and (B) of a composition used in the process according to the present invention, which may optionally also involve a cross-linking agent capable of participating in the curing reaction, will in general be a condensation cure which (in the case of curable silicon-containing functional groups) results in the formation of Si-O bonding between the components, and generally in the formation of a by-product corresponding to the curable functional groups participating in the reaction; other curing reactions, for example, hydrosilation, are also possible in principle.

Thus, for example, in the case of curable silicon-containing functional groups, the curing reaction may proceed as follows:

(i) $\equiv$Si-OH + HO-Si$\equiv$ $\rightarrow$ $\equiv$Si-O-Si$\equiv$ + $H_20$

(ii) $\equiv$Si-OCH3 + HO-Si$\equiv$ $\rightarrow$ $\equiv$Si-O-Si$\equiv$ + $CH_3OH$

(iii) $\equiv$Si-O-OCCH3 + HO-Si$\equiv$ $\rightarrow$ $\equiv$Si-O-Si$\equiv$ + $CH_3COOH$

(iv) $\equiv$Si-H + HO-Si$\equiv$ $\rightarrow$ $\equiv$Si-O-Si$\equiv$ + $H_2$

(v) $\equiv$Si-O-$NR_a$-$R_b$ + HO-Si$\equiv$ $\rightarrow$ $\equiv$Si-O-Si$\equiv$ + $R_a$-$R_b$NOH

(vi) $\equiv$Si-$NR_cR_d$ + HO-Si$\equiv$ $\rightarrow$ $\equiv$Si-O-Si$\equiv$ + $R_cR_d$NH

(vii) $\equiv$Si-O NCR'$R^2$ + HO-Si$\equiv$ $\rightarrow$ $\equiv$Si-O-Si$\equiv$ + R'$R^2$CNOH,

which may hydrolyse to an aldehyde or ketone, R'$R^2$CO and hydroxylamine, $NH_2OH$, under the conditions of the condensation.

Although curable silicon-containing groups in component (A) may be silanol groups, the presence of such groups is not necessary and may lead to undesirable curing during storage, and it is certainly preferable for the curable silicon-containing groups to be other than trihydroxysilyl groups.

Advantageously, curable silicon-containing groups in component (A) are curable by virtue of one or more curable functional groups selected from aliphatic, aromatic and araliphatic ether, ester and oxime groups which groups may be substituted or unsubstituted. Thus, for example, curable silicon-containing groups in component (A) comprise one or more oxime groups of the formula

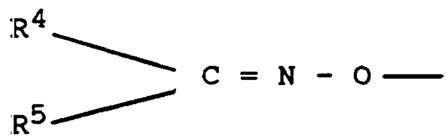

in which $R^4$ and $R^5$ may be the same or different and each represents a straight-chain or branched, saturated or unsaturated, aliphatic hydrocarbon radical, preferably having up to 7 carbon atoms, more especially up to 4 carbon atoms, especially a methyl or ethyl group; an aromatic group, for example, a phenyl group; or an araliphatic group, for example, a benzyl group; or $R^4$ and $R^5$ together represent an alkylene group; or one of $R^4$ and $R^5$ represents hydrogen. Preferably each of $R^4$ and $R^5$ is other than an aromatic group. A group $R^4$ and/or $R^5$ may be substituted or unsubstituted.

Curable silicon-containing groups in component (A) may contain more than one curable functional group bonded to silicon, and preferably contain three such groups. Thus, for example, curable silicon-containing groups in component (A) are preferably of the formula

$$-Si(OR)_3$$

wherein R is a straight-chain or branched alkyl group having from 1 to 4 carbon atoms, preferably a methyl or ethyl group.

Preferably, pendant curable silicon-containing functional groups in component (A) are connected to the polymer by a chemical linkage that is resistant to aqueous hydrolysis in natural waters; sea water, for example, has pH 8.0-8.3. The silicon-containing bonds which are capable of undergoing condensation curing as described above, for example silyl ether and silyl ester, are therefore generally unsuitable for the purpose of attaching silicon-containing groups to the polymer backbone. It is preferred that the said chemical linkage should contain silicon directly linked to carbon. For example, the chemical linkage may comprise an alkylene group $C_nH_{2n}$ where n is a non-zero integer preferably having the value 1-5, an alkylidene group, or an arylene group, for example phenylene, or may be a direct chemical bond to a carbon atom in the polymer backbone.

Advantageously, the polymer of (A) is derived from one or more monomers (A1) which carry curable silicon-containing groups and one or more monomers (A2) which do not carry such groups. In the case of monomer(s) (A) carrying pendant curable silicon-containing groups, the molar proportion of monomer(s) (A1) to that of monomer(s) (A2) may be in the range of from 1% to 30% or 50%, for example from 5% to 16%, advantageously from 5% to 14%, preferably from 5% to 12%, and more especially from 5% to 10% or from 1% to 5%.

Polymers (A) carrying curable silicon-containing groups may expediently be manufactured by the polymerisation of one or more monomers containing such groups, advantageously with one or more comonomers which do not contain such groups. For example, such silicon-containing monomers may be derivatives of compounds such as acrylic acid, methacrylic acid, styrene, or ethylene. Examples of derivatives of acrylic and methacrylic acid are the esters in which the esterifying group includes the said silicon-containing group. As particular examples of such derivatives there may be mentioned 3-(trimethoxysilyl)propyl acrylate and methacrylate (I) and 3-(dimethyl(trimethoxysilyloxy)silyl)propyl acrylate and methacrylate (II) (Me represents =methyl).

$$CH_2{=}CRCO_2(CH_2)_3Si(OMe)_3 \qquad (I)$$

R represents
H or $CH_3$

$$CH_2{=}CRCO_2(CH_2)_3SiMe_2Si(OMe)_3 \qquad (II)$$

R represents
H or $CH_3$
Compound I(R represents $CH_3$) is particularly preferred.

Examples of derivatives of styrene as monomers (A1) are those in which a benzene ring is substituted both with a vinyl or 2-propenyl group and with a silicon-containing group. As particular examples of styrene derivatives there may be mentioned the isomeric trimethoxysilylstyrenes and the isomeric 2-(trimethoxysilylethyl)styrenes. As examples of derivatives of ethylene as monomers (A1) may be mentioned trimethoxyvinylsilane and triethoxyvinylsilane.

Instead of using monomers (A1) which already carry curable silicon-containing groups, it is possible (but less preferred) to graft such groups, for example trimethoxysilyl groups, onto a preformed polymer carrying suitable reactive sites at which the curable silicon-containing groups can be attached.

The polymer of component (A) may be derived from one or more ethylenically unsaturated monomers, more especially from one or more ethylenically unsaturated monomers selected from unsaturated aliphatic hydrocarbons, for example, ethylene, propylene and butylene; unsaturated halogenated hydrocarbons, for example, vinyl chloride, vinyl fluoride, vinylidene chloride and vinylidene fluoride; vinyl aromatic compounds, for example, vinyl pyridine, vinylnaphthalene, and styrene (including ring-substituted styrenes); unsaturated acids, esters, amides and nitriles; and N-vinyl compounds, for example, N-vinyl pyrrolidone, N-vinyl carbazole and N-vinyl caprolactam. Mention should also be made of polyvinylacetate and polyvinylalcohol.

As further possibilities, the polymer of component (A) may comprise repeating units derived from urethanes, ureas, urethane-ureas, amides, imides, amide-imides, epoxy compounds, and esters. Mention should also be made of alkyl resins and polyethers.

As particular examples of olefinic monomers may be mentioned such compounds as acrylic and methacrylic acids and their ester, amide and nitrile derivatives, styrene and vinyl chloride. Acrylate and methacrylate esters are preferred monomers, especially those derived from saturated alcohols containing 4-16 carbon atoms, such as the butyl, hexyl, octyl, decyl, dodecyl and hexadecyl esters. The incorporation of such fatty esters in the polymerisation has the advantage of producing polymers which are in the glassy state at room temperature and therefore have greater resistance to mechanical stress and impact than those polymers whose glass transition temperature is above the temperature of use of the coating. It may also be advantageous to incorporate one or more monomers with reactive functionality to promote adhesion to the underlying surface, for example epoxy functionality derived, for instance, from glycidyl acrylate or methacrylate, or amino functionality derived, for instance, from an aminoalkyl acrylate or methacrylate such as dimethylaminoethyl methacrylate.

As mentioned above, the polymers of the invention advantageously exhibit a glass transition temperature somewhat below the temperatures to which the coating will be exposed and the monomeric composition of the polymer should be selected with this in mind. Furthermore, it is generally advantageous on grounds of cost, and also to avoid excessive curing, to minimise the proportion of monomers (A1) carrying pendant curable silicon-containing groups in the polymer (A). In a preferred embodiment, the polymer (A) comprises 1-40% 3-(trimethoxysilyl)-propyl methacrylate (TMSPM) and 60-99% dodecyl methacrylate (lauryl methacrylate).

It may also be advantageous to utilise two or more different comonomers not containing a curable silicon group, for example a $C_{1-4}$ alkyl acrylate or methacrylate ester together with a $C_{6-16}$ acrylic or methacrylic ester. Thus, for example, in another preferred embodiment, polymer (A) is derived from the following monomers in the following molar proportions:

| | | |
|---|---|---|
| TMSPM | | 5% |
| Lauryl or butyl acrylate | 40%) | |
| | ) | 95% |
| Methyl methacrylate | 60%) | |

Although the polymer of component (A) may include a proportion of siloxane repeating units, at least a major proportion of the repeating units, and preferably at least 55% of the units, are other than siloxane units. The proportion of siloxane repeating units is advantageously not more than 25%, preferably not more than 10%, and more especially not more than 5%. In a preferred form of composition, the polymer of component (A) is substantially free of siloxane repeating units.

Polymer (A) may have a number-average molecular weight in the range of from 1000 to 50 000, preferably from 5000 to 20 000, more especially from 5000 to 15 000.

If appropriate, a chain transfer agent may be used in the production of the polymer of component (A). As examples of chain transfer agents there may be mentioned 1-dodecanethiol and mercaptopropyltrimethoxysilane. The molecular weight of the polymer may also be controlled by varying the content of polymerisation initiator. Examples of preferred free-radical initiators include organic peroxides such as tert-butyl peroxy-2-ethyl-hexanoate (available under the trade name Trigonox® 215) and the materials available under the trade names Trigonox® 27 and Trigonox® 41-C 75.

The polysiloxane of component (B) in a composition applied in the process according to the invention is an organohydrogen-polysiloxane or a polydiorganosiloxane. The polysiloxane may, for example, comprise a copolymer of diorgano-siloxane units with organohydrogen siloxane units and/or with other diorganosiloxane units, or a homopolymer of organohydrogen siloxane units or of diorganosiloxane units.

The curable polysiloxane(s) of the present invention (B) may in principle contain any of the functional groups, which may be pendant and/or terminal, described above in connection with component (A) as susceptible to polysiloxane curing. There are not the same disadvantages, however, arising from the presence of silanol groups in component (B) as in component (A), and component (B) may accordingly be curable by virtue of such groups. Additionally or alternatively, component (B) may be curable by virtue of curable functional groups selected from aliphatic, aromatic and araliphatic ether, ester and oxime groups, which may be substituted or unsubstituted, or also trialkoxysilyl or hydrosilyl groups. A curable ether group may be, for example, an alkoxy group such as, for instance, methoxy or ethoxy. An example of a curable ester group is acetoxy.

Thus, by way of preferred example, the curable polysiloxane may be curable by virtue of oxime groups of the formula

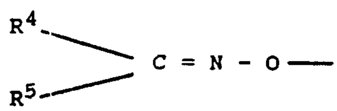

in which $R^4$ and $R^5$ may be the same or different and each represents a straight-chain or branched, saturated or unsaturated, aliphatic hydrocarbon radical, preferably having up to 7 carbon atoms, more especially up to 4 carbon atoms, especially a methyl or ethyl group; an aromatic group, for example, a phenyl group; or an araliphatic group, for example, a benzyl group, or $R^4$ and $R^5$ together represent an alkylene group, or one of $R^4$ and $R^5$ represents hydrogen. A group $R^4$ and/or $R^5$ may be substituted or unsubstituted.

Oxime-functional polysiloxanes may be prepared by reaction of the corresponding hydroxy-functional siloxane with a ketiminoxysilane, for example, methyl tris(methylethylketiminoxy) silane, or one or more of the following ketiminoxysilanes:

$$CH_3Si\ [ON = C(CH_3)_2]_3,\ CH_3Si\ [ON = C(CH_3)C_2H_5]_3,$$

$$(CH_2 = CH)Si\ [ON = C(CH_3)C_2H_5]_3,\ C_6H_5Si\ [ON = C(CH_3)_2]_3,$$

$$CH_3Si\ [ON = C\ (C_2H_5)(CH_2)_3CH_3]_3,$$

$$(CH_3)_2C = NOSi\ [ON = C(CH_3)C_2H_5)_3$$

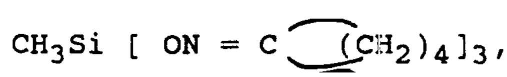

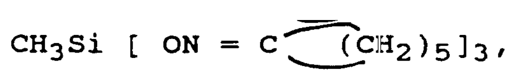

$$Si[ON = C(C_2H_5)(CH_3)]_4 \text{ or } Si[ON = C(CH_3)_2]_4.$$

Preferred components (B) are linear polymers and advantageously have the structure $R^3O(SiR^1R^2O)_nR^3$, in which $R^1$ and $R^2$, which may be the same or different on each silicon atom and on different silicon atoms in the polymer, each represents an alkyl group such as, for example, methyl, ethyl, or propyl; an alkenyl group such as, for example, vinyl or allyl; a cycloalkyl or cycloalkenyl group; an aryl group such as, for example, phenyl; or a halogenated or cyano-substituted hydrocarbon group, with the proviso that one of $R^1$ and $R^2$ may represent hydrogen on some or all of the silicon atoms and that $R^1$ and $R^2$ may each represent hydrogen on some of the silicon atoms,

$OR^3$ represents a curable functional group in which $R^3$ represents a monovalent radical such as, for example, hydrogen, alkyl, aryl or $R^4R^5CN$ where $R^4$ and $R^5$ are as hereinbefore defined, and
<u>n</u> represents a degree of polymerisation. Preferably $R^1$ and $R^2$ are each methyl, although partial or total replacement of $R^2$ by phenyl may be of advantage.

The polysiloxane component (B) in a composition applied in the process of the invention may have a number-average molecular weight in the range of from 1500 to 310 000, generally from 1800 to 80 000 or 85 000 Preferably, the number-average molecular weight of component (B) is at least 5000, advantageously at least 10 000, and more especially at least 15 000. The upper limit of molecular weight will usually be 60 000 or 70000.

The polysiloxane component (B) preferably has a viscosity in the range of from 7.5 to 200 Pa.s (7.5 to 200 poise) at 25°C. By way of illustration, it will in general be desirable to utilise a hydroxy-functional polysiloxane having a viscosity towards the upper end of the range, whereas for an oxime-functional polysiloxane it will in general be desirable to utilise a material having a viscosity towards the lower end of the range.

Advantageously, in a composition applied in the process according to the invention, the proportion of component (A) is in the range of from 50 to 99% by weight, preferably from 84 to 98% by weight, more especially from 90 to 98% by weight, and the proportion of component (B) is in the range of from 1 to 50% by weight, preferably from 2 to 16% by weight, more especially from 5 to 16% by weight, in particular from 2 to 10% by weight, all percentages being based on the total weight of (A) + (B).

In a preferred form of composition applied in the process according to the invention, the proportion of component (B) is at least 5% by weight, advantageously at least 10% by weight, and more especially from 10 to 25 or 30% by weight, all percentages being based on the total weight of (A) + (B). In general, there will be little or no advantage in using proportions of component (B) above 30 or 35% by weight, based on the total weight of (A) + (B).

A coating composition applied in the process according to the invention may include a catalyst for the condensation curing reaction and in general will include such a catalyst. Examples of catalysts which may be used include amines and the carboxylic acid salts of various metals, for example, tin, zinc, iron, lead, barium and zirconium. The salts are preferably salts of long-chain carboxylic acids, for example, dibutyltin dilaurate, dibutyltin dioctoate, iron stearate, tin (II) octoate and lead octoate.

Other possible catalysts include chelates such as, for example, dibutyltin acetoacetonate.

As a further possibility, the catalyst may comprise a halogenated organic acid, which has at least one halogen substituent on a carbon atom which is in α-position relative to the acid group, and/or at least one halogen substituent on a carbon atom which is in β-position relative to the acid group, or a derivative which is hydrolysable to form such an acid under the conditions of the condensation reaction.

Where appropriate in the following description, references to the acid catalyst include references to hydrolysable derivatives thereof.

The acid catalyst may be a mono-, di- or polybasic acid, but is preferably a monobasic acid.

The acid catalyst is a protonic acid and may comprise one or more carboxylic and/or sulphonic acid groups, preferably one or more carboxylic acid groups.

The or each halogen substituent may be fluorine, chlorine or bromine, but is preferably chlorine.

Advantageously, on an α- and/or a β-carbon atom of the acid catalyst, there are one or two fluorine substituents, from one to three chlorine substituents, or three bromine substituents. Thus, for example, the acid catalyst may comprise dichloroacetic acid, trichloroacetic acid or tribromoacetic acid.

There are preferably one or more halogen substituents on a carbon atom which is α- to the acid group, but if there is no halogen substituent on the α-carbon there will preferably be one or more other functional groups, for example hydroxy or oxo, on that carbon atom and one or more halogen substituents on the ß-carbon. Thus, for example, the catalyst may comprise 3-dichloro-2-dihydroxy propanoic acid, or 3-trichloro-2-dihydroxy-propanoic acid.

The acid is advantageously an aliphatic acid, but may comprise one or more aromatic groups, such as phenyl or substituted phenyl, provided that there is preferably no aromatic group attached to the α-carbon atom or bonded directly to the acid group. An aromatic group may be a heterocyclic group, such as pyridyl or pyrrolyl. An aliphatic acid may be a cyclic or, preferably, an acyclic acid.

Advantageously, the catalyst is a halogenated alkanoic acid having up to 5 carbon atoms or a hydroxy-substituted derivative of such an acid.

As examples of acid derivatives which are hydrolysable to form the acids under the conditions of the condensation reaction there may be mentioned anhydrides, for instance, trichloroacetic acid anhydride, and esters, which may be hydrocarbyl esters, especialy methyl esters, or alkyl silyl esters, advantageously $C_{1-4}$ alkylsilyl esters, especially methylsilyl esters. Thus, for example, the catalyst may comprise trimethylsilyltrichloroacetate.

If the catalyst contains more than one acid group, there may be halogen substitution on each α- and/or β-carbon atom or on only some of those carbon atoms.

The acid catalyst may carry one or more other substituents in addition to the specified halogen substitution.

Advantageously, in the process in accordance with the present invention an acid catalyst is used as the sole condensation catalyst in the curing of siloxane systems, optionally in conjunction with one or more other acid catalysts of the invention but in the absence of any metal salt catalyst of the kind previously proposed. In particular, acid catalysts used in the process of the invention offer the possibility of dispensing with tin-based catalysts such as dibutyltin dilaurate.

In addition, the use of an acid catalyst in the process according to the invention may offer one or more of the following advantages:

(1) It has been found that, when an acid catalyst is used, the siloxane curing reaction may require the presence of moisture to proceed. The use of such a catalyst therefore offers the possibility of providing one-pack coating compositions in which premature curing is substantially avoided.
(2) Siloxanes cured with the use of acid catalysts have been found to possess significantly improved adhesion to substrates such as glass and perspex poly(butylmethacrylate), and to anti-corrosive primer coatings.

The acid catalysts applied in the process of the invention may be used not only in the curing of coating compositions in accordance with the invention, but also for condensation curing of siloxane systems generally.
The catalytic activity of acid catalysts applied in the process in accordance with the invention is illustrated by the following results obtained in the room temperature vulcanisation of a hydroxy-functional polydimethylsiloxane (PDMS), viscosity 35 Pa.s (35 poise), with tetraethyl orthosilicate (TEOS) as curing agent.
The proportions of the reactants were as follows:

| | Parts by weight |
|---|---|
| PDMS | 96 |
| TEOS | 3.2 |
| Catalyst | 0.62 |

In each case, the catalyst was added neat to a solvent-free blend of the siloxane and the curing agent, and the following results were obtained:

| Catalyst | Activity |
|---|---|
| Dichloracetic acid | polymer cured overnight |
| Trichloroacetic acid | polymer cured overnight |
| Trichloroacetic anhydride | polymer cured overnight |
| Tribromoacetic acid | polymer cured overnight |
| Dichlorodihydroxy propanoic acid | polymer cured overnight |
| Trimethylsilyltrichloroacetate | polymer cured overnight |

In a further experiment, a mixture of solvent (xylene), siloxane polymer (hydroxy-functional PDMS), curing agent (TEOS) and catalyst (trichloroacetic acid) was stored in tightly sealed bottles and showed no gelation or viscosity increase over a 6-month period, thus showing that the acid-catalysed curing reaction will not proceed in the absence of moisture.
In another experiment, trichloracetic acid has been shown to have catalytic activity in systems cross-linked with an oxime-based curing agent, for example, vinyltris-(methylethylketoxime) or methyltris(methylethylketoxime).
The proportion of catalyst in the coating composition may be in the range of from 0.01 to 5% by weight, preferably from 0.05 to 1% by weight, based on the total composition. For example, 0.01-1% by weight on solids of dibutyltin dilaurate may be added to the coating composition soon before application to the surface to be coated. With such a level of catalyst, a coating of the present invention will typically cure tack-free within 1 day and be fully cured within 3-4 days.
Depending upon the nature of the components (A) and (B) and on the nature of the catalyst, it may be necessary for the catalyst to be packaged separately in a so-called "two-pot" system, or the catalyst may be packaged with one of the components but separately from the other.
A coating composition applied in the process according to the invention advantageously includes a cross-linking agent capable of participating in the condensation curing reaction. The use of a cross-linking agent tends to lessen the extent to which there is a visible and mechanically removable layer of unreacted siloxane material at the outer surface of the applied coating. It has been observed (using ATR-FTIR spectroscopy) that the concentration of siloxane at the outer surface of a coating formed from a composition including a cross-linking agent is greater than the siloxane concentration at the outer surface (after removal of unreacted siloxane) of a coating formed from a composition having no cross-linking agent.
Advantageously, the cross-linking agent comprises a functional silane, more especially a functional silane of the formula

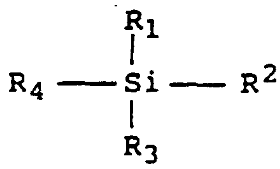

(I)

in which the groups represented by $R^1$ to $R^4$ may be the same or different and each may comprise a straight-chain or branched, saturated or unsaturated, aliphatic hydrocarbon radical, preferably having up to 7 carbon atoms, more especially up to 4 carbon atoms, or an aromatic or araliphatic hydrocarbon radical, such as, for example, phenyl or benzyl, or an aliphatic or aromatic ether group, such as an alkoxy, phenoxy or benzyloxy group, or an ester group. An aliphatic group $R^1$ to $R^4$ is preferably an alkyl group, advantageously a $C_1$-$C_4$ alkyl group, preferably a methyl or ethyl group, and an alkoxy group $R^1$ to $R^4$ is advantageously $C_1$-$C_4$ alkoxy, preferably methoxy or ethoxy. Preferred examples of alkoxysilanes of the formula (I) include tetraalkyl orthosilicates such as tetramethyl, -ethyl, -propyl or -butyl orthosilicate, dimethoxydimethyl silane and diethoxydimethyl silane. It will be appreciated that, in order to serve as a cross-linking agent, a compound of formula (I) must be at least difunctional. Any of the groups $R^1$ to $R^4$ in formula (I) may be unsubstituted or may be substituted by one or more substituents selected, for example, from halogen (especially chlorine or fluorine), amino groups or alkyl groups, which may themselves be substituted or unsubstituted.

Alternatively, a functional silane cross-linking agent may be reactive by virtue of one or more oxime groups of the formula

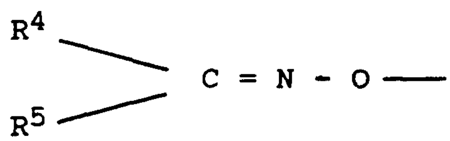

in which $R^4$ and $R^5$ may be the same or different and each represents a straight-chain or branched, saturated or unsaturated, aliphatic hydrocarbon radical, preferably having up to 7 carbon atoms, more especially up to 4 carbon atoms, especially a methyl or ethyl group; an aromatic group, for example, a phenyl group; or an araliphatic group, for example, a benzyl group, or $R^4$ and $R^5$ together represent an alkylene group, or one of $R^4$ and $R^5$ represents hydrogen. A group $R^4$ and/or $R^5$ may be substituted or unsubstituted.

Thus, the functional silane may be a ketiminoxysilane, for example, methyl tris(methylethylketiminoxy) silane, or one or more of the following ketiminoxy silanes:

$$CH_3Si\,[ON = C(CH_3)_2]_3,\ CH_3Si\,[ON = C(CH_3)C_2H_5]_3,$$

$$(CH_2 = CH)Si\,[ON = C(CH_3)C_2H_5]_3,\ C_6H_5Si\,[ON = C(CH_3)_2]_3,$$

$$CH_3Si\,[ON = C\,(C_2H_5)(CH_2)_3CH_3]_3,$$

$$(CH_3)_2C = NOSi\,[ON = C(CH_3)C_2H_5)_3$$

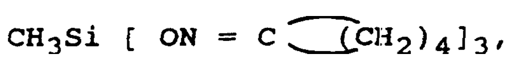

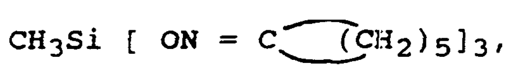

$$Si[ON = C(C_2H_5)(CH_3)]_4 \text{ or } Si[ON = C(CH_3)_2]_4.$$

Other possible cross-linking or curing agents include oximes such as vinyltris(methylethylketoxime) or methyl tris (methyl ethylketoxime).

As a further possibility, more particularly when organometallic catalysts are used, especially tin-based catalysts, the cross-linking or curing agent may comprise a cyclic compound of the following formula:

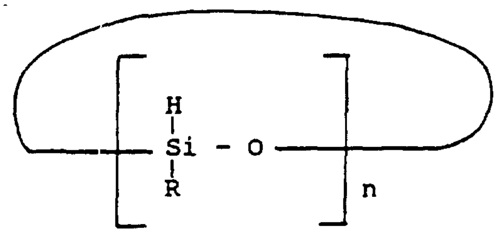

in which n is an integer of from 3 to 10, and R represents hydrogen or methyl.

A silane cross-linking agent may in principle be incorporated in a monomeric form or in the form of a self-condensation product, which may be, for example, a dimer, trimer, heptamer or a low molecular weight polymer.

Advantageously, especially when the cross-linking - agent is a functional silane, the proportion of cross-linking agent may be in the range of from 0.05 to 10% by weight, generally from 2 to 5% by weight, based on the weight of component (B) in the composition.

It has been found that compositions applied in the process according to the invention which comprise a polymer (A) which does not contain silanol groups and a poly(diorganosiloxane) (B) which does contain silanol groups are stable on storage provided that the polymer (A) does not contain groups known to be effective as catalysts in curing silicones, for example amines and the metal salts of carboxylic acids as mentioned above. It has further been found that compositions containing no silanol groups but containing groups effective as catalysts are stable in the absence of moisture.

The process for forming a coating according to the present invention is most conveniently carried out using a solution of the composition in a non-reacting volatile solvent for the composition. Suitable solvents include aromatic hydrocarbons, for example toluene, xylene and trimethylbenzene; ketones, for example 4-methylpentan-2-one (methylisobutylketone), 5-methylhexan-2-one (methyl isoamylketone) and cyclohexanone; esters, for example butyl acetate and 2-ethoxy-ethyl acetate, and mixtures of the above with one another or with an aliphatic hydrocarbon, for example in the form of white spirit. Such solutions can be applied to the surface to be coated by any of the known methods such as brush-painting, roller-painting, spray-painting and using aerosol formulations. In order to minimise the use of solvent on both cost and environmental grounds, it is advantageous to use as concentrated a solution as possible which is compatible with the coating technique employed. A solution of a coating composition applied in the process according to the invention may comprise at least 35% by weight solids, generally at least 50% by weight solids. More concentrated solutions, for example containing at least 70% solids, may be employed if the polymer component (A) is of low molecular weight. In principle, the maximum solids content may be as high as 90% by weight or even more, but in general the maximum practicable solids cortent will be in the range 75-85% by weight, typically 80% by weight.

The coating compositions applied in the process of the present invention require the presence of water in order to achieve full cure. This water need not be specifically added, either during or after application of the composition. It has been found that atmospheric moisture or the water commonly found on damp surfaces to be coated is sufficient to induce curing, and it will not normally be necessary or appropriate to heat the applied coating for curing purposes.

Because compositions applied in the process according to the invention are in general sensitive to the presence of water, it is preferable to take steps to minimise the water content of all ingredients of the composition, and it will be appreciated that no water or aqueous material should be added. Thus, for example, commercially available solvents will frequently contain a small amount of water (say, 1-2% by volume) and it is preferable to reduce the water content of such materials before use. In principle, such reduction in water content may be achieved by distillation in conjunction with a drying agent such as, for example, sodium, sodium hydride or calcium hydride or anhydrous calcium sulphate, but advantageously a reactive water-scavenger is used, for example, an inorganic salt such as, for example, magnesium sulphate (followed by filtration) or a mono- or di-functional silane, for instance, ethoxytrimethyl silane.

The compositions applied in the process of the present invention and the coatings derived therefrom may also include one or more unreactive oils such as, for example, a silicone oil, especially a methyl phenylsilicone oil such as that sold by Rhone-Poulenc under the trademark "Rhodorsil Huile 550" or a petroleum or polyolefin oil or a polyaromatic oil.

It has proved to be especially advantageous, in terms of the enrichment of the outermost surface region of the applied coating with siloxane material (in some cases leading to the formation of a morphologically distinct outermost layer comprising siloxane material) for the composition to include a quantity of a petrolatum oil. In the case of coatings formed from a composition not including petrolatum, there will typically be a very thin layer of pure siloxane component

at the outer surface, with a siloxane-rich layer underneath. In the case of a coating formed from the same composition but including petrolatum, a relatively thick siloxane-rich layer is formed, typically at least an order of magnitude thicker than the siloxane-rich layer formed without the use of petrolatum; such a siloxane-rich layer may comprise a 50/50 mixture of siloxane and petrolatum.

The proportion of petrolatum is advantageously in the range of from 5 to 25% by weight (based on the amount of component (A) preferably in the range of from 15 to 20% by weight. The proportion of petrolatum oil used may be higher than 25% by weight, but proportions above 25% by weight in unpigmented systems will in general lead to an undesirable decrease in the integrity of the applied coating. In the case of pigmented systems it may be possible to use a proportion of petrolatum oil above 25% by weight, possibly as high as 30% or 35% by weight.

If desired, a petrolatum oil may be used in conjunction with another unreactive oil such as an aromatic hydrocarbon oil or oils (AHO), or any of the other unreactive oils specifically mentioned hereinbefore.

The compositions applied in the process of the present invention can be pigmented, for example at a pigment volume concentration of 0.5 to 25%, or dyed, or can be used as clear transparent coatings.

The compositions may also contain other excipients and/or fillers such as barium sulphate or other mineral fillers, pyrogenic silica, bentonite or other clays, typically in a proportion of from 0.5 to 5% by weight, preferably from 1 to 2% by weight.

The coating compositions applied in the process of the present invention can be single-pack coatings for moisture cure, or a two-pack system may be used. Thus, for example, the polymer component (A) can be packaged separately from the polysiloxane (B), and any catalyst is preferably packaged separately from the polymer component (A) .

Examples of possible two-pack systems are as follows:

| (a) | Pack I | Pack II |
|---|---|---|
| | Component (A)<br>Component (B)<br>Pigment<br>Filler<br>Solvent: | Cross-linking agent<br>Catalyst<br>Solvent |

| (b) | Pack I | Pack II |
|---|---|---|
| | Component (A)<br>Pigment<br>Filler<br>Solvent | Component (B)<br>Cross-linking agent<br>Catalyst<br>Solvent |

The coatings can be applied to steel, concrete, aluminium or fibre-reinforced polyester surfaces or over known anticorrosive coatings such as epoxy, vinyl or alkyd coatings with good adhesion. Normally, an anti-corrosive coating will be applied to a metal substrate first.

The invention is illustrated by the following Examples:

Preparation Example 1 - Preparation of polymer (A) Monomers:

| | Parts by weight |
|---|---|
| Methyl methacrylate | 590.06 |
| Lauryl methacrylate | 1000.01 |
| Trimethoxysilyl propyl methacrylate | 128.73 |

Procedure:

600 Parts of xylene were added to a reaction vessel. The xylene was heated under a slow stream of dry nitrogen to approximately 90°C, whereupon the introduction of the monomers (with 500 parts dry xylene and 8.77 parts

azobisisobutyronitrile [AIBN] as initiator) was commenced. The feed rate of the monomers was adjusted to give a total addition time of approximately 5 hours.

Upon completion of the addition, the solution was maintained at 105-110°C for a further 1 hour, whereupon a further 0.87 parts of AIBN was added and the reaction mixture was maintained at 105-110°C for a further 2 hours. The concentration was adjusted to 65-70% solids. The resulting polymer possessed a $T_g$ of -25°C. and a weight average molecular weight of approximately 10000.

Preparation Example 2 - Preparation of polymer (B)

A ketoxime silane-functional siloxane polymer was prepared by blending 100 parts of an alpha, omega-hydroxyfunctional siloxane polymer (viscosity 7.5 Pa.s [7.5 poise], 25°C) and 4 parts of methyltris(methylethylketoxime) silane in the absence of atmospheric moisture. The resulting fluid siloxane polymer had a viscosity of 15.2 poise at 25°C.

Preparation Example 3 - Preparation of polymer (A)

A polyurethane polymer for use as component (A) in a composition applied in the process according to the invention was prepared under dry nitrogen according to the following formulation:

| | Parts by weight |
|---|---|
| Polyurethane polyol (Equivalent Weight 740) | 100 |
| dry methylethyl ketone | 33.33 |
| aminopropyl silane | 24.22 |

The aminopropyl silane was added dropwise so as to keep the temperature below 60°C. The resulting solution was allowed to stand overnight under dry nitrogen.

Preparation Example 4 - Preparation of Polymer (A)

An epoxy polymer for use as component (A) in a composition applied in the process according to the invention was prepared according to the following formulation:

| | Parts by weight |
|---|---|
| Epikote® 1004* | 100 |
| dry methylethylketone | 24.9 |
| aminopropyl silane | 22.2 |

* Condensation product of bis-phenol A and epichlorohydrin.

The aminopropyl silane was added in one shot and the resulting solution was allowed to stand at room temperature overnight.

Preparation Example 5 - Preparation of Polymer (A)

| Monomers: | Parts by weight |
|---|---|
| Butyl acrylate | 1000 |
| Methyl methacrylate | 782.11 |
| Trimethoxysilylpropyl methacrylate | 204.22 |
| 1-Dodecanethiol | 66.58 |

Procedure

325 parts of trimethylbenzene (TMB) were added to a reaction vessel. The TMB was heated under a slow

stream of dry nitrogen to approximately 90°C whereupon the introduction of the monomers (with 325 parts TMB and 10.248 part azobisisobutyronitrile [AIBN] as an initiator) was commenced. The feed rate of the monomers was adjusted to give a total addition time of approximately 5 hours.

Upon completion of the monomer feed, the solution was maintained at 100°C for a further 1 hour whereupon a further 0.102 parts of AIBN was added and the reaction mixture was maintained at 100°C for a further 2 hours. The resulting polymer possessed a $T_g$ of -20°C and a weight average molecular weight (Mw) of approximately 10 000.

Preparation Example 6 -- Preparation of Polyester

Stage I

| Monomers: | Parts by weight |
|---|---|
| Neo-pentyl glycol | 100.00 |
| Dimethylterephthalate | 74.62 |
| Catalyst (Fastcat® 4010, a tin-based catalyst) | 0.245 |

To a 1 litre reaction vessel was added the neopentyl glycol, the dimethylterephthalate and the catalyst. The resulting mixture was heated to approximately 170°C and held at that temperature until all the theoretical amount of methanol (approximately 64g) had been removed. This required 1.5h.

Stage II

| Monomers | Parts by weight |
|---|---|
| Adipic acid | 56.10 |
| Maleic anhydride | 11.13 |
| Xylene (solvent) | 60.20 |

Procedure

The adipic acid and maleic anhydride were added to the product of Stage I and the temperature was increased to approximately 190°C and held at this temperature until 26g of water had been removed. The xylene was then added and the temperature was reduced to approximately 170°C and maintained until the remaining water of condensation had been removed. This required approximately 6h.

Preparation Example 7 - Preparation of silyl adduct of the Polyester prepared in Example 6

Using the polyester prepared in Preparation Example 6 a silyl adduct for use as component (A) in a composition according to the invention was prepared according to the following formulation:

| | Parts by weight |
|---|---|
| Polyester | 100 |
| Xylene | 29.35 |
| Amino silane* | 17.42 |

*Union Carbide silane A-1170

The amino silane was added in a single shot, under dry nitrogen, and the reaction vessel was allowed to stand overnight at room temperature.

The following composition Examples illustrate the coating compositions of the present invention:

Composition Example 1

The following ingredients were mixed in a paint dispenser: -

| | Parts by weight |
|---|---|
| Polymer (A) of Preparation Example 1 alpha, omega-hydroxyfunctional siloxane (viscosity 200 Pa.s [200 poise]) | 100<br>20 |
| pyrogenic silica (Aerosil® P 972) | 1.2 |
| dibutyltindilaurate (catalyst) | 0.1 |
| dry xylene | 60 |

Composition Example 2

Composition Example 1 was repeated but using 0.1 parts trichloroacetic acid as catalyst instead of the dibutyltindilaurate.

Composition Example 3

Composition Example 1 was repeated but using the ketoxime silane-functional siloxane polymer of Preparation Example 2 instead of the hydroxyfunctional siloxane polymer of Composition Example 1.

Reference Composition Example 4

Composition Example 3 was repeated but using 0.1 parts trichloroacetic acid as catalyst in place of dibutyltindilaurate.

Reference Composition Example 5

The following ingredients were mixed in a paint dispenser:

| | Parts by weight |
|---|---|
| Polymer (A) of Preparation Example 3 hydroxy-functional siloxane polymer (viscosity 200 Pa.s [200 poise]) | 100<br>52.56 |
| dibutyltindilaurate | 0.92 |
| dry methylethylketone | 82.14 |

Reference Composition Example 6

| | Parts by weight |
|---|---|
| Polymer (A) of Preparation Example 4 hydroxy-functional siloxane polymer (viscosity 200 Pa.s [200 poise]) | 100<br>46.08 |
| dibutyltindilaurate | 0.76 |
| dry methylethylketone | 78.66 |

Reference Composition Example 7

Composition Example 1 was repeated but with the addition of 0.125 parts by weight of tetraethyl orthosilicate (TEOS).

Reference Composition Example 8

Composition Example 1 was repeated but with the addition of 0.125 parts by weight of dimethyldiethoxy silane.

Reference Composition Example 9

The following ingredients were mixed in a paint dispenser:

| | Parts by weight |
|---|---|
| Polymer (A) of Preparation Example 1 alpha, omega-hydroxy functional siloxane (viscosity 7.5 or 200 Pa.s | 100 |
| [7.5 or 200 poise]) | 31.25 |
| petrolatum | 25.00 |
| pyrogenic silica (Aerosil® P 972) | 1.2 |
| TEOS | 0.156 |
| dibutyltindilaurate (catalyst) | 0.1 |
| dry xylene | 84.13 |

Reference Composition Example 10

The following ingredients were mixed in a paint dispenser:

| | Parts by weight |
|---|---|
| Polymer (A) of Preparation Example 1 | 100 |
| alpha, omega-hydroxyfunctional siloxane (viscosity 7.5 or 200 Pa.s | |
| [7.5 or 200 poise]) | 34.02 |
| petrolatum | 25.00 |
| aromatic hydrocarbon oils (AHO) | 11.11 |
| pyrogenic silica (Aerosil® R 972) | 1.2 |
| TEOS | 0.170 |
| dibutyltindilaurate (catalyst) | 0.1 |
| dry xylene | 91.60 |

Reference Composition Example 11

The following ingredients were mixed in a paint dispenser:

| | Parts by weight |
|---|---|
| Polymer (A) of Preparation Example 5 | 459.08 |
| Bentone SDI | 16.508 |
| Trimethylbenzene (solvent | 377.57 |
| TEOS | 0.583 |
| alpha, omega-hydroxyfunctional siloxane (viscosity 7.5 or 200 Pa.s | |
| [7.5 or 200 poise]) | 114.709 |
| Titanium dioxide (Tiona 472) | 107.320 |
| Dibutyltindilaurate (catalyst) | 1.206 |

Reference Composition Example 12

The following ingredients were mixed in a paint dispenser:

| | Parts by weight |
|---|---|
| Polymer (A) of Preparation Example 5 | 100 |
| alpha, omega-hydroxyfunctional siloxane (viscosity 7.5 or 200 Pa.s [7.5 or 200 poise]) | 42.02 |
| Dibutyltindilaurate | 0.21 |
| TEOS | 0.210 |
| TMB (dry solvent) | 95.916 |
| Petrolatum | 25.00 |
| AHO | 11.11 |

Reference Composition Example 13

The following ingredients were mixed in a paint dispenser:

| | Parts by weight |
|---|---|
| Polymer (A) of Preparation Example 7 | 100 |
| alpha, omega-hydroxyfunctional siloxane (viscosity 200 Pa.s [200 poise]) | 25 |
| dibutyltindilaurate | 0.312 |
| solvent (xylene) | 53.56 |

Anti-Fouling Testing

Composition Examples 1, 2 and 3 were coated on formica and wood substrates primed with an anticorrosive and allowed to cure. The coated substrates were immersed in a marine estuary known for its weed, slime and shellfish fouling. After one season (Feb.-Oct.) the accumulated fouling could be easily removed with light rubbing or a low pressure water jet. Accumulated fouling on control panels of formica or wood not coated with the compositions applied in the process of the invention but maintained under the same conditions over the same period could not be similarly removed.

## Claims

1. A process for inhibiting fouling of a substrate in an aquatic environment, which comprises applying to the substrate, before exposure to the said environment, a coating composition which comprises:

   (A) a polymer carrying pendant and/or terminal curable functional groups, at least a major proportion of the repeating units in the backbone of the polymer of (A) being other than siloxane units, and
   (B) a curable organohydrogen polysiloxane or polydiorganosiloxane, the curable functional groups in component (A) being capable of undergoing a curing reaction with component (B),

   and curing the applied composition.

2. A process as claimed in claim 1, wherein component (A) comprises pendant curable functional groups.

3. A process as claimed in claim 1 or claim 2, wherein component (A) comprises curable silicon-containing functional groups.

4. A process as claimed in any one of claims 1 to 3, wherein the polymer of (A) is derived from one or more monomers (A1) which carry curable silicon-containing groups and one or more monomers (A2) which do not carry such groups.

5. A process as claimed in claim 4, wherein the monomer(s) (A1) carry pendant curable silicon-containing groups and the molar proportion of monomer(s) (A1) to that of monomers (A2) is in the range of from 1% to 50%.

**6.** A process as claimed in any one of claims 1 to 5, wherein curable silicon-containing groups in component (A) are curable by virtue of one or more curable functional groups selected from aliphatic, aromatic and araliphatic ether, ester and oxime groups, which groups may be substituted or unsubstituted.

**7.** A process as claimed in claim 6, wherein curable silicon-containing groups in component (A) comprise one or more oxime groups of the formula

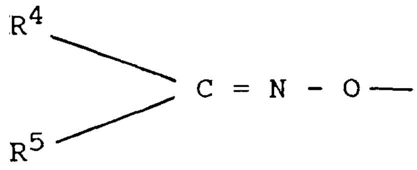

in which $R^4$ and $R^5$ may be the same or different, substituted or unsubstituted, and each represents a straight-chain or branched, saturated or unsaturated, aliphatic hydrocarbon radical, an aromatic group, or an araliphatic group, or $R^4$ and $R^5$ together represent an alkylene group, or one of $R^4$ and $R^5$ represents hydrogen.

**8.** A process as claimed in any one of claims 1 to 7, wherein curable silicon-containing groups in component (A) contain more than one curable functional group bonded to silicon.

**9.** A process as claimed in claim 8, wherein curable silicon-conibaining groups in component (A) are of the formula

$$-Si(OR)_3$$

wherein R is a straight-chain or branched alkyl group having from 1 to 4 carbon atoms.

**10.** A process as claimed in any one of claims 1 to 8, wherein curable silicon-containing groups in component (A) are other than trihydroxysilyl groups.

**11.** A process as claimed in any one of claims 1 to 10, wherein pendant curable silicon-containing functional groups in component (A) are connected to the polymer by a chemical linkage that is resistant to aqueous hydrolysis in natural waters.

**12.** A process as claimed in claim 11, wherein the chemical linkage comprises an alkylene, alkylidene or arylene group, or a direct bond.

**13.** A process as claimed in any one of claims 1 to 12, wherein substantially all of the curable functional groups in component (A) are silicon-containing groups.

**14.** A process as claimed in any one of claims 1 to 12, wherein component (A) comprises curable functional groups selected from epoxy, amino, hydroxy, and alkoxy groups and hydrogen atoms.

**15.** A process as claimed in any one of claims 1 to 14, wherein the proportion of siloxane repeating units in component (A) does not exceed 25%.

**16.** A process as claimed in claim 15, wherein component (A) is substantially free from siloxane repeating units.

**17.** A process as claimed in any one of claims 1 to 16 wherein the polymer of component (A) is derived from one or more ethylenically unsaturated monomers.

**18.** A process as claimed in claim 17, wherein the polymer of component (A) is derived from one or more ethylenically unsaturated monomers selected from unsaturated aliphatic hydrocarbons; unsaturated halogenated hydrocarbons; vinyl aromatic compounds; unsaturated acids, esters, amides and nitriles; and N-vinyl compounds.

**19.** A process as claimed in any one of claims 1 to 18, wherein the curable polysiloxane (B) is curable by virtue of silanol groups.

**20.** A process as claimed in any one of claims 1 to 18, wherein the curable polysiloxane (B) is curable by virtue of silicon-containing functional groups.

**21.** A process as claimed in any one of claims 1 to 18, wherein the curable polysiloxane (B) is curable by virtue of curable functional groups selected from aliphatic, aromatic and araliphatic ether, ester and oxime groups, trialkoxysilyl or hydrosilyl groups.

**22.** A process as claimed in claim 21, wherein the curable polysiloxane (B) is curable by virtue of oxime groups of the formula

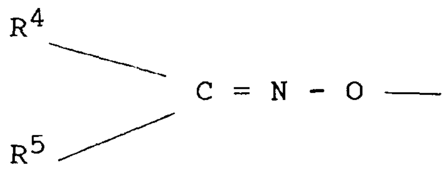

in which $R^4$ and $R^5$ may be the same or different, substituted or unsubstituted, and each represents a straight-chain or branched, saturated or unsaturated, aliphatic hydrocarbon radical, an aromatic group, or an araliphatic group, or $R^4$ and $R^5$ together represent an alkylene group, or one of $R^4$ and $R^5$ represents hydrogen.

**23.** A process as claimed in any one of claims 1 to 22, wherein component (B) comprises a linear polymer.

**24.** A process as claimed in claim 23, wherein component (B) has the structure $R^3O(SiR^1R^2O)_nR^3$, in which $R^1$ and $R^2$, which may be the same or different on each silicon atom and on different silicon atoms in the polymer, each represents an alkyl group; an alkenyl group; a cycloalkyl or cycloalkenyl group; an aryl group; or a halogenated or cyano-substituted hydrocarbon group, with the proviso that one of $R^1$ and $R^2$ may represent hydrogen on some or all of the silicon atoms and that $R^1$ and $R^2$ may each represent hydrogen on some of the silicon atoms,

$OR^3$ represents a curable functional group in which $R^3$ represents a monovalent radical, and
$\underline{n}$ represents a degree of polymerisation.

**25.** A process as claimed in any one of claims 1 to 24, wherein component (B) has a number-average molecular weight in the range of from 5000 to 85000.

**26.** A process as claimed in any one of claims 1 to 25, wherein the composition includes a cross-linking agent capable of participating in the condensation curing reaction.

**27.** A process as claimed in claim 26, wherein the cross-linking agent comprises a functional silane.

**28.** A process as claimed in any one of claims 1 to 27, wherein the composition includes one or more unreactive oils selected from silicone oils, petroleum oils, polyolefin oils, and polyaromatic oils.

**29.** A process as claimed in any one of claims 1 to 28, wherein the composition includes a catalyst for the condensation curing reaction.

**30.** A process as claimed in claim 29, wherein the catalyst comprises a halogenated organic acid, which has at least one halogen substituent on a carbon atom which is in α-position relative to the acid group, and/or at least one halogen substituent on a carbon atom which is in β-position relative to the acid group, or a derivative which is hydrolysable to form such an acid under the conditions of the condensation reaction.

**31.** A process as claimed in any one of claims 1 to 30, wherein the proportion of component (A) is in the range of from 50% to 99% by weight, and the proportion of component (B) is in the range of from 1 to 50% by weight, the percentages being based on the total weight of (A) + (B).

**32.** A process as claimed in any one of claims 1 to 30, wherein the proportion of component (B) is at least 5% by weight, based on the total weight of (A) + (B).

**33.** A process as claimed in any one of claims 1 to 32, wherein the composition includes a non-reacting volatile solvent.

**34.** A process as claimed in claim 33, wherein the composition comprises at least 35% by weight solids.

**35.** The use, as a coating providing resistance to fouling on a substrate in an aquatic environment, of a coating composition as defined in any one of claims 1 to 34, the composition being cured after application to the substrate.

**36.** A process or use as claimed in any one of claims 1 to 35, in which the substrate is made of metal.

**37.** A process or use as claimed in claim 36, in which the metal substrate is pre-treated with an anti-corrosive material.

**38.** A process or use as claimed in claim 36 or 37 in which the coating composition is applied directly to the surface of the substrate or on to the anti-corrosive layer, as the case may be.

**39.** A process or use as claimed in any one of claims 1 to 38, wherein the aquatic environment is a marine environment.

**40.** Use of a substrate bearing a coating formed from a composition as defined in any one of claims 1 to 34, in an aquatic environment.

**41.** Use of a substrate as claimed in claim 40, which is a marine structure.

**Patentansprüche**

**1.** Verfahren zur Verhinderung der Verschmutzung eines Substrats in einer wässrigen Umgebung, umfassend das Auftragen einer Beschichtungszusammensetzung, die

(A) ein Polymer, das seitenständige und/oder terminale, härtbare, funktionelle Gruppen trägt, wobei wenigstens ein Hauptteil der Repetiereinheiten in dem Gerüst des Polymers von (A) von Siloxan-Einheiten verschieden ist, und
(B) ein härtbares Organohydrogenpolysiloxan oder Polydiorganosiloxan umfasst, wobei die härtbaren, funktionellen Gruppen in (A) befähigt sind, eine Härtungsreaktion mit der Komponente (B) durchzuführen,

auf das Substrat, bevor die Umgebung zur Einwirkung gelangt, und Härten der aufgetragenen Beschichtung.

**2.** Verfahren gemäß Anspruch 1, worin die Komponente (A) härtbare, funktionelle Seitengruppen umfasst.

**3.** Verfahren gemäß Anspruch 1 oder Anspruch 2, worin die Komponente (A) härtbare, Silicium-enthaltende, funktionelle Gruppen umfasst.

**4.** Verfahren gemäß irgendeinem der Ansprüche 1 bis 3, worin sich das Polymer von (A) von einem oder mehreren Monomeren (A1), die Silicium-enthaltende Gruppen tragen, und einem oder mehreren Monomeren (A2), die keine derartigen Gruppen aufweisen, ableitet.

**5.** Verfahren gemäß Anspruch 4, worin das Monomer (die Monomeren) (A1) härtbare, Silicium-enthaltende Seitengruppen trägt (tragen), und das Stoffmengenverhältnis des Monomers (der Monomere) (A1) zu den Monomeren (A2) im Bereich von 1 % bis 50 % liegt.

**6.** Verfahren gemäß irgendeinem der Ansprüche 1 bis 5, worin härtbare, Silicium-enthaltende Gruppen in der Komponente (A) aufgrund einer oder mehrerer härtbarer, funktioneller Gruppen härtbar sind, die aus aliphatischen, aromatischen und araliphatischen Ether-, Ester- und Oximgruppen ausgewählt sind, wobei die Gruppen substituiert oder unsubstituiert sein können.

**7.** Verfahren gemäß Anspruch 6, worin die härtbaren, Silicium-enthaltenden Gruppen in der Komponente (A) eine oder mehrere Oximgruppen der Formel:

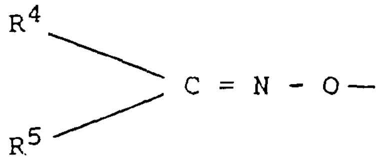

umfassen, worin $R^4$ und $R^5$ einander gleich oder voneinander verschieden, substituiert oder unsubstituiert sein können und jeweils einen geradkettigen oder verzweigtkettigen, gesättigten oder ungesättigten, aliphatischen Kohlenwasserstoffrest, eine aromatische Gruppe oder eine araliphatische Gruppe darstellen, oder $R^4$ und $R^5$ zusammen eine Alkylengruppe darstellen, oder eines von $R^4$ und $R^5$ Wasserstoff darstellt.

**8.** Verfahren gemäß irgendeinem der Ansprüche 1 bis 7, worin härtbare, Silicium-enthaltende Gruppen in der Komponente (A) mehr als eine härtbare, funktionelle, an Silicium gebundene Gruppe enthalten.

**9.** Verfahren gemäß Anspruch 8, worin härtbare, Silicium-enthaltende Gruppen in der Komponente (A) die Formel:

$$-Si(OR)_3$$

aufweisen, worin R eine geradkettige oder verzweigtkettige Alkylgruppe mit 1 bis 4 Kohlenstoffatomen ist.

**10.** Verfahren gemäß irgendeinem der Ansprüche 1 bis 8, worin härtbare, Silicium-enthaltende Gruppen in der Komponente (A) von Trihydroxysilylgruppen verschieden sind.

**11.** Verfahren gemäß irgendeinem der Ansprüche 1 bis 10, worin härtbare, Silicium-enthaltende, funktionelle Seitengruppen in der Komponente (A) durch eine chemische Bindung, die gegenüber einer wässrigen Hydrolyse in natürlichen Wässern beständig ist, mit dem Polymer verbunden sind.

**12.** Verfahren gemäß Anspruch 11, worin die chemische Bindung eine Alkylen-, Alkyliden- oder Arylengruppe oder eine direkte Bindung umfasst.

**13.** Verfahren gemäß irgendeinem der Ansprüche 1 bis 12, worin im wesentlichen alle härtbaren, funktionellen Gruppen in der Komponente (A) Silicium-enthaltende Gruppen sind.

**14.** Verfahren gemäß irgendeinem der Ansprüche 1 bis 12, worin die Komponente (A) härtbare, funktionelle Gruppen umfasst, die aus Epoxy-, Amino-, Hydroxy- und Alkoxygruppen und Wasserstoffatomen ausgewählt sind.

**15.** Verfahren gemäß irgendeinem der Ansprüche 1 bis 14, worin der Anteil der Siloxan-Repetiereinheiten in der Komponente (A) 25 % nicht übersteigt.

**16.** Verfahren gemäß Anspruch 15, worin die Komponente (A) im wesentlichen keine Siloxan-Repetiereinheiten enthält.

**17.** Verfahren gemäß irgendeinem der Ansprüche 1 bis 16, worin das Polymer der Komponente (A) sich von einem oder mehreren ethylenisch ungesättigten Monomeren ableitet.

**18.** Verfahren gemäß Anspruch 17, worin das Polymer der Komponente (A) sich von einem oder mehreren ethylenisch ungesättigten Monomeren ableitet, die aus ungesättigten, aliphatischen Kohlenwasserstoffen, ungesättigten, halogenierten Kohlenwasserstoffen, vinylaromatischen Verbindungen, ungesättigten Säuren, Estern, Amiden und Nitrilen und N-Vinyl-Verbindungen ausgewählt sind.

**19.** Verfahren gemäß irgendeinem der Ansprüche 1 bis 18, worin das härtbare Polysiloxan (B) aufgrund von Silanol-Gruppen härtbar ist.

**20.** Verfahren gemäß irgendeinem der Ansprüche 1 bis 18, worin das härtbare Polysiloxan (B) aufgrund Silicium-enthaltender, funktioneller Gruppen härtbar ist.

**21.** Verfahren gemäß irgendeinem der Ansprüche 1 bis 18, worin das härtbare Polysiloxan (B) aufgrund härtbarer, funktioneller Gruppen härtbar ist, die aus aliphatischen, aromatischen und araliphatischen Ether-, Ester- und Oximgruppen, Trialkoxysilyl- oder Hydrosilylgruppen ausgewählt sind.

**22.** Verfahren gemäß Anspruch 21, worin das härtbare Polysiloxan (B) aufgrund von Oximgruppen der Formel

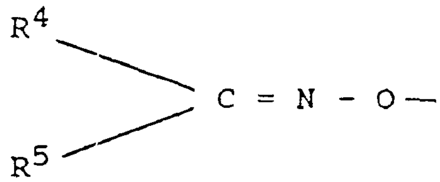

härtbar ist, worin $R^4$ und $R^5$ einander gleich oder voneinander verschieden, substituiert oder unsubstituiert sein können und jeweils einen geradkettigen oder verzweigtkettigen, gesättigten oder ungesättigten, aliphatischen Kohlenwasserstoffrest, eine aromatische Gruppe oder eine araliphatische Gruppe darstellen, oder $R^4$ und $R^5$ zusammen eine Alkylengruppe darstellen, oder eines von $R^4$ und $R^5$ Wasserstoff darstellt.

**23.** Verfahren gemäß irgendeinem der Ansprüche 1 bis 22, worin die Komponente (B) ein lineares Polymer umfasst.

**24.** Verfahren gemäß Anspruch 23, worin die Komponente (B) die Struktur $R^3O(SiR^1R^2O)_nR^3$ aufweist, in der

$R^1$ und $R^2$, die an jedem Siliciumatom und an verschiedenen Siliciumatomen in dem Polymer einander gleich oder voneinander verschieden sein können, jeweils eine Alkylgruppe, eine Alkenylgruppe, eine Cycloalkyl- oder Cycloalkenylgruppe, eine Arylgruppe oder eine halogenierte oder cyanosubstituierte Kohlenwasserstoffgruppe darstellen, mit der Maßgabe, dass eines von $R^1$ und $R^2$ an einigen oder allen Siliciumatomen Wasserstoff darstellen kann, und
$R^1$ und $R^2$ jeweils Wasserstoff an einigen der Siliciumatome darstellen kann,
$OR^3$ eine härtbare, funktionelle Gruppe darstellt, in der $R^3$ einen einwertigen Rest darstellt, und
n den Polymerisationsgrad darstellt.

**25.** Verfahren gemäß irgendeinem der Ansprüche 1 bis 24, worin die Komponente (B) ein Zahlenmittel der Molmasse im Bereich von 5000 bis 85 000 hat.

**26.** Verfahren gemäß irgendeinem der Ansprüche 1 bis 25, worin die Zusammensetzung ein Vernetzungsmittel einschließt, das zur Teilnahme an der Kondensationshärtungsreaktion befähigt ist.

**27.** Verfahren gemäß Anspruch 26, worin das Vernetzungsmittel ein funktionales Silan umfasst.

**28.** Verfahren gemäß irgendeinem der Ansprüche 1 bis 27, worin die Zusammensetzung ein oder mehrere unreaktive Öle einschließt, die aus Siliconölen, Erdölen, Polyolefinölen und polyaromatischen Ölen ausgewählt sind.

**29.** Verfahren gemäß irgendeinem der Ansprüche 1 bis 28, worin die Zusammensetzung einen Katalysator zur Kondensationshärtungsreaktion einschließt.

**30.** Verfahren gemäß Anspruch 29, worin der Katalysator eine halogenierte, organische Säure, die wenigstens einen Halogen-Substituenten an einem Kohlenstoffatom aufweist, das sich in $\alpha$-Position in Bezug auf die Säuregruppe befindet, und/oder wenigstens einen Halogen-Substituenten an einem Kohlenstoffatom, das sich in $\beta$-Position in Bezug auf die Säuregruppe befindet, oder ein Derivat umfasst, das hydrolysierbar ist, um eine solche Säure unter den Umständen der Kondensationsreaktion zu bilden.

**31.** Verfahren gemäß irgendeinem der Ansprüche 1 bis 30, worin der Anteil der Komponente (A) im Bereich von 50 bis 99 Gew.-% liegt, und der Anteil der Komponente (B) im Bereich von 1 bis 50 Gew.-% liegt, wobei die Prozentzahlen auf das Gesamtgewicht von (A) + (B) bezogen sind.

**32.** Verfahren gemäß irgendeinem der Ansprüche 1 bis 30, worin der Anteil der Komponente (B) wenigstens 5 Gew.-%, bezogen auf das Gesamtgewicht von (A) + (B), beträgt.

**33.** Verfahren gemäß irgendeinem der Ansprüche 1 bis 32, worin die Zusammensetzung ein nichtreagierendes, flüchtiges Lösungsmittel umfasst.

**34.** Verfahren gemäß Anspruch 33, worin die Zusammensetzung wenigstens 35 Gew.-% Feststoffe umfasst.

**35.** Verwendung einer Beschichtungszusammensetzung gemäß irgendeinem der Ansprüche 1 bis 34 als Beschichtung, die einen Widerstand gegenüber der Verschmutzung eines Substrats in einer wässrigen Umgebung bereitstellt, wobei die Zusammensetzung nach dem Auftragen auf das Substrat gehärtet wird.

**36.** Verfahren oder Verwendung gemäß irgendeinem der Ansprüche 1 bis 35, worin das Substrat aus Metall besteht.

**37.** Verfahren oder Verwendung gemäß Anspruch 36, worin das Metall-substrat vorher mit einem korrosionsbeständigen Material behandelt wird.

**38.** Verfahren oder Verwendung gemäß den Ansprüchen 36 oder 37, worin die Beschichtungszusammensetzung je nachdem direkt auf die Oberfläche des Substrats oder auf die korrosionsbeständige Schicht aufgetragen wird.

**39.** Verfahren oder Verwendung gemäß irgendeinem der Ansprüche 1 bis 38, worin die wässrige Umgebung eine Meeresumgebung ist.

**40.** Verwendung eines Substrats, das eine Beschichtung trägt, die aus einer Zusammensetzung gemäß irgendeinem der Ansprüche 1 bis 34 gebildet wurde, in einer wässrigen Umgebung.

**41.** Verwendung eines Substrats gemäß Anspruch 40, das eine Schiffsstruktur aufweist.

**Revendications**

**1.** Procédé pour empêcher la salissure d'un substrat dans un environnement aquatique, qui comprend l'application sur le substrat, avant qu'il ne soit exposé audit environnement, d'une composition de revêtement qui comprend :

(A) un polymère comportant des groupes fonctionnels polymérisables latéraux et/ou terminaux, au moins la majeure partie des motifs répétitifs dans le squelette du polymère de (A) étant des motifs autres que des motifs siloxane, et
(B) un organohydrogénopolysiloxane ou un polydiorganosiloxane polymérisable, les groupes fonctionnels polymérisables dans le composant (A) étant capables de subir une réaction de polymérisation avec le composant (B),

et la polymérisation de la composition appliquée.

**2.** Procédé selon la revendication 1, dans lequel le composant (A) comprend des groupes fonctionnels polymérisables latéraux.

**3.** Procédé selon la revendication 1 ou la revendication 2, dans lequel le composant (A) comprend des groupes fonctionnels polymérisables contenant du silicium.

**4.** Procédé selon l'une quelconque des revendications 1 à 3, dans lequel le polymère de (A) est dérivé de un ou de plusieurs monomères (A1) qui comportent des groupes polymérisables contenant du silicium et de un ou de plusieurs monomères (A2) qui ne comportent pas de tels groupes.

**5.** Procédé selon la revendication 4, dans lequel le(les) monomère(s) (A1) comportent des groupes polymérisables et latéraux contenant du silicium et la proportion molaire du (des) monomère(s) (A1) à celle du(des) monomère (s) (A2) est comprise dans la plage allant de 1 % à 50 %.

**6.** Procédé selon l'une quelconque des revendications 1 à 5, dans lequel les groupes polymérisables contenant du silicium dans le composant (A) sont polymérisables du fait de la présence de un ou de plusieurs groupes fonctionnels polymérisables sélectionnés parmi les groupes éther, ester et oxime aliphatiques, aromatiques et araliphatiques, lesquels groupes peuvent être substitués ou non substitués.

**7.** Procédé selon la revendication 6, dans lequel les groupes polymérisables contenant du silicium dans le composant (A) comprennent un ou plusieurs groupes oxime de formule :

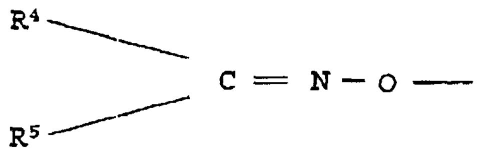

dans laquelle $R^4$ et $R^5$ peuvent être identiques ou différents, substitués ou non substitués, et représentent chacun un radical hydrocarbure aliphatique, saturé ou insaturé, linéaire ou ramifié, un groupe aromatique, ou un groupe araliphatique, ou $R^4$ et $R^5$ représentent ensemble un groupe alkylène, ou l'un parmi $R^4$ et $R^5$ représente l'hydrogène.

**8.** Procédé selon l'une quelconque des revendications 1 à 7, dans lequel les groupes polymérisables contenant du silicium dans le composant (A) contiennent plus de un groupe fonctionnel polymérisable lié au silicium.

**9.** Procédé selon la revendication 8, dans lequel les groupes polymérisables contenant du silicium dans le composant (A) sont de formule :

$$-Si(OR)_3$$

dans laquelle R est un groupe alkyle linéaire ou ramifié ayant de 1 à 4 atomes de carbone.

**10.** Procédé selon l'une quelconque des revendications 1 à 8, dans lequel les groupes fonctionnels polymérisables contenant du silicium dans le composant (A) sont des groupes autres que des groupes trihydroxysilyle.

**11.** Procédé selon l'une quelconque des revendications 1 à 10, dans lequel les groupes fonctionnels polymérisables et latéraux contenant du silicium dans le composant (A) sont liés au polymère par une liaison chimique qui est résistante à l'hydrolyse aqueuse en eaux naturelles;

**12.** Procédé selon la. revendication 11, dans lequel la liaison chimique comprend un groupe alkylène, alkylidène ou arylène, ou une liaison directe.

**13.** Procédé selon l'une quelconque des revendications 1 à 12, dans lequel sensiblement tous les groupes fonctionnels polymérisables dans le composant (A) sont des groupes contenant du silicium.

**14.** Procédé selon l'une quelconque des revendications 1 à 12, dans lequel le composant (A) comprend des groupes fonctionnels polymérisables sélectionnés parmi les groupes époxy, amino, hydroxy et alcoxy et les atomes d'hydrogène.

**15.** Procédé selon l'une quelconque des revendications 1 à 14, dans lequel la proportion des motifs répétitifs siloxane dans le composant (A) n'excède pas 25 %.

**16.** Procédé selon la revendication 15, dans lequel le composant (A) est sensiblement exempt de motifs répétitifs siloxane.

**17.** Procédé selon l'une quelconque des revendications 1 à 16, dans lequel le polymère du composant (A) est dérivé de un ou de plusieurs monomères éthyléniquement insaturés.

**18.** Procédé selon la revendication 11 dans lequel le polymère du composant (A) est dérivé de un ou de plusieurs monomères éthyléniquement insaturés sélectionnés parmi les hydrocarbures aliphatiques insaturés ; les hydrocarbures halogénés insaturés ; les composés aromatiques vinyliques ; les acides, esters, amides et nitriles insaturés ; et les composés N-vinyliques.

**19.** Procédé selon l'une quelconque des revendications 1 à 18, dans lequel le polysiloxane polymérisable (B) est polymérisable du fait de la présence de groupes silanol,

**20.** Procédé selon l'une quelconque des revendications 1 à 18, dans lequel le polysiloxane polymérisable (B) est polymérisable du fait de la présence de groupes fonctionnels contenant du silicium.

**21.** Procédé selon l'une quelconque des revendications 1 à 18, dans lequel le polysiloxane polymérisable (B) est polymérisable du fait de la présence de groupes fonctionnels polymérisables sélectionnés parmi les groupes éther, ester et oxime aliphatiques, aromatiques et araliphatiques et les groupes trialcoxysilyle ou hydrosilyle.

**22.** Procédé selon la revendication 21, dans lequel le polysiloxane polymérisable (B) est polymérisable du fait de la présence de groupes oxime de formule :

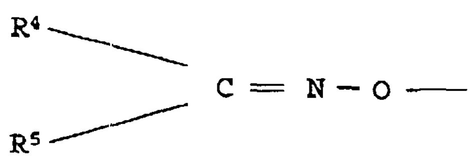

dans laquelle $R^4$ et $R^5$ peuvent être identiques ou différents, substitués ou non substitués, et représentent chacun un radical hydrocarbure aliphatique, saturé ou insaturé, linéaire ou ramifié, un groupe aromatique, ou un groupe araliphatique, ou $R^4$ et $R^5$ représentent ensemble un groupe alkylène, ou l'un parmi $R^4$ et $R^5$ représente l'hydrogène.

**23.** Procédé selon l'une quelconque des revendications 1 à 22, dans lequel le composant (B) comprend un polymère linéaire.

**24.** Procédé selon la revendication 23, dans lequel le composant (B) présente la structure $R^3O(SiR^1R^2O)_nR^3$, dans laquelle $R^1$ et $R^2$, qui peuvent être identiques ou différents sur chaque atome de silicium et sur des atomes de silicium différents dans le polymère, représentent chacun un groupe alkyle ; un groupe alcényle ; un groupe cycloalcyle ou cycloalcényle ; un groupe aryle ; ou un groupe hydrocarbure halogéné ou à substitution cyano, à condition que l'un parmi $R^1$ et $R^2$ puisse représenter l'hydrogène sur quelques-uns ou sur la totalité des atomes de silicium et que $R^1$ et $R^2$ puissent chacun représenter l'hydrogène sur quelques-uns des atomes de silicium,

$OR^3$ représente un groupe fonctionnel polymérisable dans lequel $R^3$ représente un radical monovalent, et n représente un degré de polymérisation.

**25.** Procédé selon l'une quelconque des revendications 1 à 24, dans lequel le composant (B) présente une masse moléculaire moyenne en nombre comprise entre 5 000 et 85 000.

**26.** Procédé selon l'une quelconque des revendications 1 à 25, dans lequel la composition comprend un agent de réticulation apte à participer à la réaction de polymérisation par condensation.

**27.** Procédé selon la revendication 26, dans lequel l'agent de polymérisation comprend un silane fonctionnel.

**28.** Procédé selon l'une quelconque des revendications 1 à 27, dans lequel la composition comprend une ou plusieurs huiles non réactives sélectionnées parmi les huiles de silicone, les huiles de pétrole, les huiles polyoléfiniques et les huiles polyaromatiques.

**29.** Procédé selon l'une quelconque des revendications 1 à 28, dans lequel la composition comprend un catalyseur pour la réaction de polymérisation par condensation.

**30.** Procédé selon la revendication 29, dans lequel le catalyseur comprend un acide organique halogéné, qui comporte au moins un substituant halogène sur un atome de carbone qui se trouve en position $\alpha$ par rapport au groupe acide, et/ou au moins un substituant halogène sur un atome de carbone qui se trouve en position $\beta$ par rapport au groupe acide, ou un dérivé qui est hydrolysable pour former un tel acide dans les conditions de la réaction de condensation.

**31.** Procédé selon l'une quelconque des revendications 1 à 30, dans lequel la proportion du composant (A) est comprise entre 50 % et 99 % en poids, et la proportion du composant (B) est comprise entre 1 % et 50 % en poids, les pourcentages étant rapportés au poids total de (A) + (B).

**32.** Procédé selon l'une quelconque des revendications 1 à 30. dans lequel la proportion du composant (B) est au moins de 5 % en poids, le pourcentage étant rapporté au poids total de (A) + (B).

**33.** Procédé selon l'une quelconque des revendications 1 à 32, dans lequel la composition comprend un solvant volatil non réactif.

**34.** Procédé selon la revendication 33, dans lequel la composition comprend au moins 35 % en poids de matières solides.

**35.** Utilisation, en tant que revêtement pour donner une résistance à la salissure à un substrat en environnement aquatique, d'une composition de revêtement telle que définie selon l'une quelconque des revendications 1 à 34, la composition étant polymérisée après application sur le substrat.

**36.** Procédé ou utilisation selon l'une quelconque des revendications 1 à 35, dans lequel le substrat est fait en métal.

**37.** Procédé ou utilisation selon la revendication 36, dans lequel le substrat en métal est traité au préalable avec une matière anticorrosive.

**38.** Procédé ou utilisation selon la revendication 36 ou 37, dans lequel la composition de revêtement est appliquée directement sur la surface du substrat ou sur la couche d'anticorrosif, suivant le cas.

**39.** Procédé ou utilisation selon l'une quelconque des revendications 1 à 38, dans lequel l'environnement aquatique est un environnement marin.

**40.** Utilisation d'un substrat comportant un revêtement formé à partir d'une composition telle que définie selon l'une quelconque des revendications 1 à 34, dans un environnement aquatique.

**41.** Utilisation d'un substrat selon la revendication 40, qui est un ouvrage marin.